# EUROPÄISCHE PATENTSCHRIFT

(11) **EP 1 747 995 B1**
(45) Veröffentlichungstag und Bekanntmachung des Hinweises auf die Patenterteilung: **20.10.2010**
(21) Anmeldenummer: 06014534.9
(22) Anmeldetag: 13.07.2006
(51) Int. Cl.: B65B 31/02, B65D 81/20

(54) **Verfahren und Vorrichtung zum gasdichten Verpacken von Gegenständen mit sich eng an die Gegenstände anlegendem Folienmaterial**
Method and apparatus for the gastight conditioning of articles in a skin-packaging foil
Procédé et appareil pour emballer des articles dans un film à pelliplacage, étanche au gaz

(30) Priorität: 26.07.2005 DE 102005035476
(43) Veröffentlichungstag der Anmeldung: 31.01.2007
(73) Patentinhaber: Jörg von Seggern Maschinenbau GmbH, 26133 Oldenburg (DE)
(72) Erfinder: von Seggern, Jörg, 26133 Oldenburg (DE)
(74) Vertreter: Jabbusch, Matthias

(56) Entgegenhaltungen:
- WO-A-88/01592
- DE-A1- 10 237 933
- FR-A1- 2 565 552
- FR-A1- 2 725 692
- US-A1- 2003 196 412

## Beschreibung

Die Erfindung betrifft ein Verfahren zum gasdichten Verpacken von Gegenständen mit sich eng an die Gegenstände anlegendem Folienmaterial unter Einsatz eines Vakuums, wobei der Gegenstand in eine Schale eingelegt wird und zum Verschließen der Schale eine tiefziehbare Folie mit der Schale verbunden wird.

Die Erfindung betrifft des weiteren eine Vorrichtung zum gasdichten Verpacken von Gegenständen mit sich eng an die Gegenstände anlegendem Folienmaterial unter Einsatz eines Vakuums, vorzugsweise zum Durchführen des vorgenannten Verfahrens, umfassend eine höhenveränderbar geführte Auflage für zumindest eine Schale und umfassend zumindest ein höhenveränderbar geführtes Siegelwerkzeug für die tiefziehbare Folie sowie mit zumindest einer Schneideinrichtung für die tiefziehbare Folie. Schließlich betrifft die Erfindung eine Verpackung.

Verfahren und Vorrichtungen der vorgenannten Gattungen werden dazu eingesetzt, Gegenstände zu verpacken. Bei diesen Gegenständen kann es sich um anorganische Produkte handeln, wie beispielsweise Werkzeuge oder Schreibwaren, welche in entsprechenden Verpackungen in Märkten zum Verkauf feil gehalten werden. Insbesondere dann, wenn ein Vakuum zum Tiefziehen der Folie, die mit der Schale verschweißt wird, eingesetzt wird, kann es sich bei den Gegenständen um organische Produkte, wie Lebensmittel handeln. Insbesondere Fleisch- und Wurstwaren werden mit dieser Art Verpackungen eingepackt, um im Innenraum der Verpackung ein möglichst geringes Gasvolumen zu belassen.

Bei bekannten Verfahren wird so vorgegangen, daß ein Gegenstand in eine Schale unit umlaufenden Rand eingelegt wird und anschließend die tiefziehbare Folie mit der Schale verschweißt wird. Nach dem Tiefziehen wird die Folie auf das Maß der Schale zugeschnitten, dabei erfolgt häufig ein Schneiden von Folie und Schale in einem Schritt, z.B. wenn ein Verrutschen der Schale eintritt. Auf nachteilige Weise können dabei scharfe Schalenränder ausgebildet werden. Ein weiterer Nachteil ist, daß dieses nachfolgende Schneiden an der noch für das Schweißen erwärmten Folie vorgenommen wird. Die Folie weist in ihrem erwärmten Zustand eine weiche Konsistenz auf, so daß sie einem Zuschneidemesser wenig Widerstand entgegensetzen kann. In der Folge entstehen unscharfe Schnittkanten, welche zu einem unansehnlichen Knautschen und Verwerfen der Schnittränder der Folie führen. Eine derartige Vorrichtung ist aus der DE 102 37 933 A1 bekannt.

Der Erfindung liegt die Aufgabe zugrunde, ein Verfahren aufzuzeigen, mit dem es ermöglicht ist, Gegenstände in ansehnlich ausgestaltete gasdichte Verpackungen zu verpacken. Weiterhin sollen eine Vorrichtung, mit der ein derartiges Verpacken möglich ist, und eine Verpackung aufgezeigt werden.

Verfahrensseitig ist diese Aufgabe erfindungsgemäß dadurch gelöst, daß die tiefziehbare Folie auf ein Maß des umlaufenden Randes zugeschnitten wird und daß anschließend oder gleichzeitig die tiefziehbare Folie auf den umlaufenden Rand gasdicht aufgebracht wird.

Auch bei dem erfindungsgemäßen Verfahren wird eine Schale mit einem umlaufenden Rand eingesetzt. Dieser umlaufende Rand wird jedoch bei einem Verpacken eines Gegenstandes nicht beschädigt, so daß dieser Rand von vorneherein mit einer gefälligen und griffsympathischen Abkantung oder anderer Ausgestaltung versehen sein kann. Der umlaufende Rand der Schale wird erfindungsgemäß dadurch geschont, daß vor dem Aufbringen der tiefziehbaren Folie auf den umlaufenden Rand dieselbe zugeschnitten wird.

Bei dem erfindungsgemäßen Verfahren ist die Bearbeitungsreihenfolge somit gegenüber dem Stand der Technik umgedreht. Zunächst wird die Folie zugeschnitten, anschließend wird sie aufgebracht. Dies hat zum einen den Vorteil, daß das Schneiden der Folie in deren kaltem Zustand vorgenommen wird. In diesem Zustand ist die Folie ausgehärtet, so daß ihr saubere Schnittkanten zugefügt werden können. Das Entstehen von Wellen und Verwerfungen ist vorteilhaft verhindert. Zum anderen wird ein Schneiden der Folie nach dem Schweißen und somit in ihrem erwärmten Zustand vermieden. Auch die umlaufenden Ränder der Schale werden nicht geschnitten, da das Schneiden der Folie in ihrem kalten Zustand in einer Weise erfolgen kann, in der dafür vorgesehene Schneidwerkzeuge nicht mit der Schale in Kontakt geraten. Eine Randgestaltung der Schale bleibt somit erhalten, scharfe Schnittkanten treten vorteilhaft nicht auf.

Nach einer ersten Weiterbildung des erfindungsgemäßen Verfahrens ist vorgesehen, daß die tiefziehbare Folie auf den umlaufenden Rand aufgeschweißt wird. Durch das Schweißen wird einerseits eine feste und gasdichte Verbindung zwischen Folie und Schale hergestellt. Zum anderen erfolgt durch das Aufschweißen der im Vorfeld zugeschnittenen Folie ein Erwärmen der Folie, so daß sie einem anschließend oder gleichzeitig durchgeführten Tiefziehvorgang aufgrund shrer erwärmten Zustandes gut zugänglich ist. In diesem Zustand ist die tiefziehbare Folie ohne weiteres dehnbar.

Um das Tiefziehen durchführen zu können, sieht eine Weiterbildung der Erfindung vor, daß im Umgebungsbereich der Schale ein Vakuum angeordnet ist. Mit dem Vakuum lassen sich Druckverhältnisse einstellen, die bei Ausbilden eines Druckgefälles zu einem Tiefziehen der Folie führen. Durch das Tiefziehen legt sich die Folie nach dem sogenannten "Skin"-Verfahren eng an den zu verpackenden Gegenstand sowie an nicht mit dem Gegenstand belegte Bereiche der Schale an.

Zur weiteren Ausbildung des erfindungsgemäßen Verfahrens ist noch vorgesehen, daß im Umgebungsbereich der tiefziehbaren Folie auf der der Schale abgekehrten Seite ein Überdruck ausbildbar ist. Die der Schale abgekehrten Seite der tiefziehbaren Folie ist mit dem auf dieser Seite ausbildbaren Überdruck belastbar. Dadurch wird das auf der anderen Seite der tiefziehbaren Folie angreifende Vakuum unterstützt, um eine möglichst enge Anlage der tiefziehbaren Folie an dem zu verpackenden Gegenstand zu erreichen. Die möglichst enge Anlage erwirkt nämlich vorteilhaft nicht nur eine Fixierung des Gegenstandes, sie sorgt bei z. B. fleischhaltigen Gegenständen auch dafür, daß in dem Fleisch enthaltene insbesondere flüssige Bestandteile nicht aus diesem austreten können. So können Marinaden oder auch der eigene Fleischsaft in dem Produkt gehalten werden, so daß es nicht austrocknet und trotz der durch die Verpackung hergestellten längeren Haltbarkeit eine Frische behält. Der Überdruck kann dabei schlagartig aufgebaut werden, um ein schnelleres und enges Anlegen der Folie zu erreichen.

Zur vorrichtungsseitigen Lösung der Aufgabe sieht die Erfindung vor, daß die Auflage zumindest eine Auflageeinrichtung für den umlaufenden Rand der Schale aufweist und daß zwischen der Schale und der tiefziehbaren Folie eine Distanzplatte angeordnet ist, welche auf die Auflageeinrichtung für den umlaufenden Rand auflegbar ist, wobei dabei der umlaufende Rand zumindest teilweise frei bleibt und wobei in der Distanzplatte zumindest ein mit der Schale in Deckungslage bringbarer Durchbruch angeordnet ist.

Nach dem erfindungsgemäßen Verfahren ist vorgesehen, die Folie zunächst zuzuschneiden und anschließend auf die Schale aufzubringen. Aufgrund dieser Verfahrensweise ist nicht länger eine separate Schneidstation für die Folie erforderlich. Sie kann wie beim Stand der Technik der Vorrichtung zugeordnet sein, da das Schneiden der Folie im Vorfeld oder gleichzeitig mit dem Versiegeln bzw. Verschweißen der Folie erfolgt.

Die Schneideinrichtung umfaßt vorzugsweise Messerklingen, mit denen ein Schneiden der tiefziehbaren Folie erfolgreich durchführbar ist.

Nach der konstruktiven Ausbildung sind die Auflage für die Schale und das Siegelwerkzeug höhenveränderbar geführt. Auflage und Siegelwerkzeug können somit einander angenähert und voneinander entfernt werden. Die Annäherung wird dazu genutzt, das Siegelwerkzeug auf die tiefziehbare Folie aufzulegen, wenn diese auf dem umlaufenden Rand der Schale zur Auflage gebracht ist.

Nach der Erfindung ist vorgesehen, daß die Auflage zumindest eine Auflageeinrichtung für den umlaufenden Rand der Schale aufweist. Die Schale ist mit Hilfe der Auflage in die Auflageeinrichtung für den umlaufenden Rand einbringbar. Der umlaufende Rand wird vorzugsweise auf diese Auflageeinrichtung aufgelegt, damit er für das Verschweißen bzw. Versiegeln mit der tiefziehbaren Folie bereitliegt. Die Auflageeinrichtung unterstützt den umlaufenden Rand und bildet ein Gegenlager für das auf den Rand aufzulegende Siegelwerkzeug aus.

Erfindungsgemäß ist zwischen der Schale bzw. den Schalen und der tiefziehbaren Folie eine Distanzplatte angeordnet, welche auf die Auflageeinrichtung für den umlaufenden Rand auflegbar ist, wobei dabei der umlaufende Rand zumindest teilweise frei bleibt. Diese erfindungsgemäß vorgesehene Distanzplatte unterstützt das vorherige Zuschneiden der tiefziehbaren Folie vor ihrem Aufschweißen bzw. Versiegeln auf den umlaufenden Rand der Schale. Dazu ist die Distanzplatte auf die in der Auflageeinrichtung aufgenommenen umlaufenden Ränder der Schale auflegbar. Die Distanzplatte bildet nun mit ihrer oben liegenden Oberfläche eine Ebene aus, die oberhalb des umlaufenden Randes angeordnet ist. Auf diese Ebene kann die tiefziehbare Folie aufgelegt werden und in dieser Ebene kann an die tiefziehbare Folie die Schneideinrichtung angesetzt werden. Ist das Zuschneiden der tiefziehbaren Folie erfolgt, fällt diese durch die Distanzplatte hindurch und legt sich auf die umlaufenden Ränder auf. Diese umlaufenden Ränder werden von der Distanzplatte freigehalten. Auch die anderen Bereiche der Schale können frei bleiben, um eine großflächige Anlage des Siegelwerkzeuges zu ermöglichen, damit neben dem Verschweißen der tiefziehbaren Folie zugleich ein Erwärmen dieser Folie für einen nachfolgenden bzw. gleichzeitig durchgeführten Tiefziehvorgang erfolgt. In der Distanzplatte ist dafür vorzugsweise zumindest ein mit der Schale in deckungsgleiche Lage bringbarer Durchbruch angeordnet. Dieser Durchbruch hat dann zum Siegelwerkzeug korrespondierende Abmessungen.

Nach einer nächsten Weiterbildung der erfindungsgemäßen Vorrichtung ist vorgesehen, daß die Schneideinrichtung dem Siegelwerkzeug räumlich zugeordnet ist. Durch diese räumliche Zuordnung kann ein zeitgleiches Zuschneiden und Versiegeln erfolgen, auch ein zeitlich kurz aufeinander folgendes Schneiden und Versiegeln ist möglich. Die Zuordnung von Schneideinrichtung und Siegelwerkzeug zueinander ist räumlich gegeben, konstruktiv sind beide Baugruppen voneinander unabhängig, um ein separates Durchführen der Arbeitsgänge Zuschneiden und Versiegeln zu ermöglichen.

Die Schneideinrichtung kann das Siegelwerkzeug umlaufen. Ist das Siegelwerkzeug beispielsweise rechteckig ausgebildet, so können Messerklingen der Schneideinrichtung dieses Siegelwerkzeug wie einen Rahmen umlaufen. Vor dem Aufsetzen des Siegelwerkzeuges auf die Folie erfolgt mit den rahmenartig ausgebildeten Messerklingen ein Zuschneiden derselben.

Bei dem Einsatz dieser Distanzplatte mit den Durchbrüchen ist es vorteilhaft, dem Siegelwerkzeug die Schneideinrichtung räumlich zuzuordnen. Bei einem Heranführen des Siegelwerkzeuges an die tiefziehbare Folie kann zugleich ein Zuführen der Schneideinrichtung erfolgen. Die Schneideinrichtung ist dabei vorzugsweise eng an einer Kante des Durchbruches der Distanzplatte vorbeiführbar, so daß sich zwischen einer Messerklinge der Schneideinrichtung und dieser Kante des Durchbruches ein Schereneffekt ergibt, mit dem die noch kalte tiefziehbare Folie unter Herstellen einer sauberen Schnittkante durchtrennt wird. Das Schneidwerkzeug ist dabei vorzugsweise vom Siegelwerkzeug abgekoppelt und federnd gelagert. Durch diese Abkopplung ist es ermöglicht, das Siegelwerkzeug nachfolgend näher an die Schale heranzuführen als das Schneidwerkzeug. Nach dieser Heranführung des Siegelwerkzeuges kann eine Versiegelung zwischen Folie und Schale erfolgen, während das Schneidwerkzeug in einer von der Schale entfernten Position verharrt, um den umlaufenden Rand der Schale nicht zu beschädigen.

Zur weiteren Ausbildung der erfindungsgemäßen Vorrichtung ist noch vorzugsweise vorgesehen, daß durch das Siegelwerkzeug hindurch zumindest eine Überdruckleitung verläuft. Das Siegelwerkzeug ist auf der Seite der tiefziehbaren Folie angeordnet, welche der Schale abgekehrt ist. Durch die durch das Siegelwerkzeug hindurch verlaufende Überdruckleitung kann ein Überdruckmedium, z. B. Luft, hinzugeführt werden, um auf dieser Seite der Folie den verfahrensgemäß vorzugsweise vorgesehenen Überdruck zu erzeugen.

Selbständiger Schutz wird auch beansprucht für eine Verpackung, die nach dem erfindungsgemäßen Verfahren hergestellt wird. Diese Verpackung zeichnet sich erfindungsgemäß dadurch aus, daß die tiefziehbare Folie nach ihrem Auflegen auf zumindest einen umlaufenden Rand der Schale diesen Rand teilweise abdeckt.

Erfindungsgemäß ist somit vorgesehen, daß die auf den umlaufenden Rand aufgelegte Folie diesen Rand nicht vollständig abdeckt. Die Folie kann jeweils zum äußeren Rand des umlaufenden Randes einen Rücksprung aufweisen, so daß sie mit diesem Rand nicht in Kontakt gerät. Sie kann vielmehr auf einem Bereich des umlaufenden Randes aufgeschweißt sein, der von der Außenkante des umlaufenden Randes noch einen Abstand hat. Dadurch wird eine saubere Schweißnaht hergestellt.

Ein umlaufender Rand der Schale ist dabei immer der Bereich der Schalenoberfläche, welcher zumindest eine Vertiefung in der Schale umlaufend umschließt. Die Schale kann eine Vertiefung aufweisen, die von einem umlaufenden Rand umgeben ist. Dabei ist es auch möglich, daß in einer Gesamtverpackung mehrere Vertiefungen angeordnet sind, beispielsweise bei mehreren zusammengesetzten Yoghurtbechern. Jeder dieser Vertiefungen kann dabei eine separate tiefziehbare Folie zugeordnet sein, welche lediglich mit dem umlaufenden Rand, der diese Vertiefung umgibt, verbunden wird. Es erfolgt dann kein Gesamtabdecken der verschiedenen Vertiefungen mit einer Folie, sondern es werden mehrere Folien vorgesehen. Diese Verpackung weist zwischen den einzelnen Vertiefungen Bereiche auf, die nicht von einer Folie belegt sind. In diesen Bereichen können dann bevorzugt Perforationen angebracht werden, um das Vereinzeln der einzelnen Verpackungsbereiche voneinander zu erleichtern. In diesem Fall können Abzugslaschen der tiefziehbaren Folie auch von einer Anordnung im Außenbereich der Gesamtverpackung in einen Innenbereich verlegt werden, beispielsweise dahin, wo die tiefziehbaren Folien mehrerer Vertiefungen einander angenähert sind.

Ein Ausführungsbeispiel der erfindungsgemäßen Vorrichtung, aus dem weitere erfinderische Merkmale hervorgehen, ist in der Zeichnung dargestellt. Es zeigen:
- Fig. 1 bis 4: Schnittansichten einer Vorrichtung zum gasdichten Verpacken von Gegenständen mit sich eng an die Gegenstände anlegendem Folienmaterial in verschiedenen Bearbeitungssituationen während eines Verpackungsvorganges und
- Fig. 5: eine maßstäblich vergrößerte Darstellung der Einzelheit V in Fig. 4.

Die Vorrichtung in den Figuren weist ein Unterwerkzeug 9 und ein Oberwerkzeug 1 auf. Das Unterwerkzeug 9 umfaßt zwei Auflagetische 8 für zwei Schalen 6. Jede der Schalen hat einen umlaufenden Rand 10. Die Auflagetische 8 sind auf ein Gestell 11 aufgestellt, das höhenveränderbar ist.

In dem Oberwerkzeug 1 sind zwei Siegelwerkzeuge 2 aufgenommen. Das Oberwerkzeug 1 ist dabei insgesamt höhenveränderbar geführt.

Den Siegelwerkzeugen 2 räumlich zugeordnet sind Schneideinrichtungen 3, welche als die Siegelwerkzeuge 2 umlaufende Messer ausgebildet sind. Die Schneideinrichtungen 3 sind in federnd gelagerten Messerhaltern 12 aufgenommen.

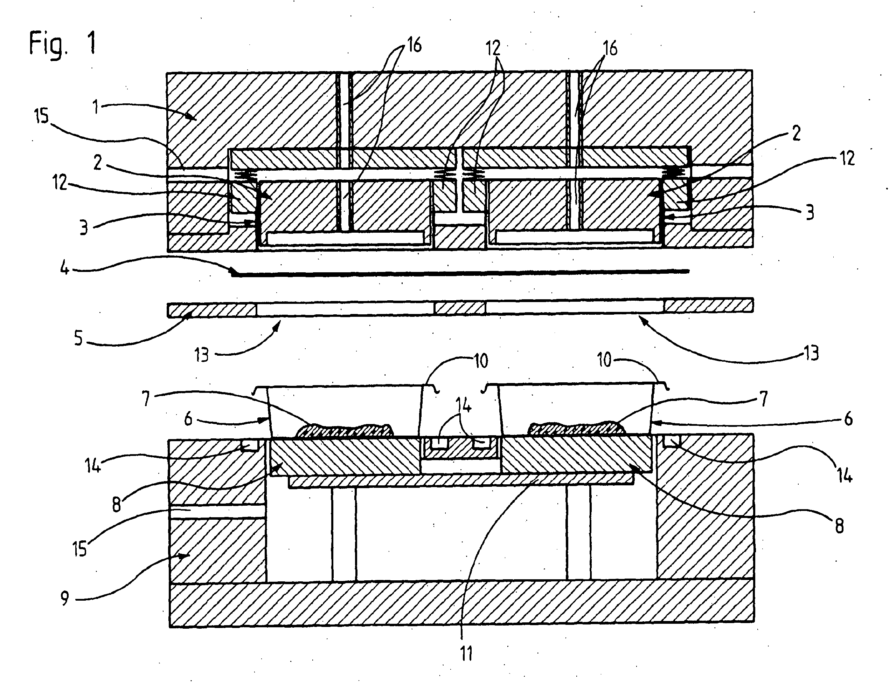

Figur 1 zeigt des weiteren eine tiefziehbare Folie 4. Diese Folie 4 liegt vor ihrem Aufsiegeln auf die umlaufenden Ränder 10 der Schalen 6 einstückig vor.

Die Vorrichtung weist noch zwischen der tiefziehbaren Folie 4 und den Schalen 6 eine Distanzplatte 5 auf. Diese Distanzplatte 5 hat Durchbrüche 13, welche mit den Schalen 6 korrespondieren.

Im Bereich des Unterwerkzeuges 9 ist den Auflagetischen 8 noch eine Auflageeinrichtung zugeordnet. Diese Auflageeinrichtung wird durch die obersten Abschnitte des Unterwerkzeuges 9 ausgebildet. Im Bereich dieser Auflageeinrichtung sind in die Oberfläche des Unterwerkzeuges 9 Vertiefungen 14 eingelassen, in welche die umlaufenden Ränder 10 der Schalen 6 vorstehen können.

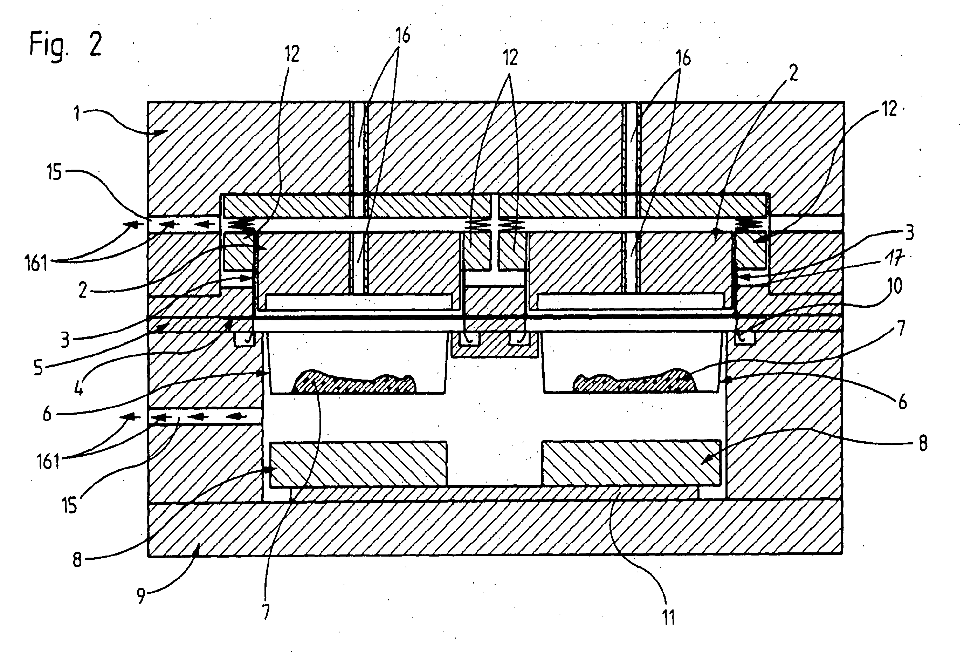

Figur 2 zeigt den Zustand nach Absenken der Auflagetische 8 mit Hilfe des Gestells 11. Die Schalen 6 sind auf die Auflageeinrichtung des Unterwerkzeuges 9 aufgelegt. Ihre umlaufenden Ränder 10 werden durch das Unterwerkzeug 9 unterstützt.

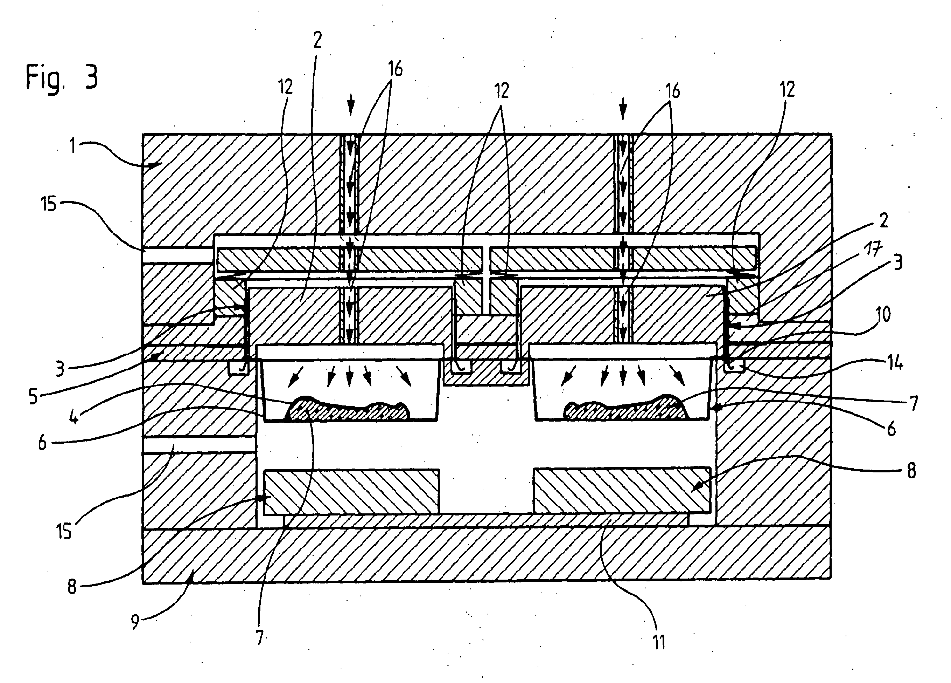

Die Distanzplatte 5 ist auf das Unterwerkzeug aufgelegt. Auf der Distanzplatte 5 liegt die tiefziehbare Folie 4 auf, das Oberwerkzeug 1 mit den Siegelwerkzeugen 2 und den Schneideinrichtungen 3 ist der Folie 4 angenähert. Die Schneideinrichtungen 3 sitzen bereits auf der Folie 4 nahezu auf, sie werden an zugeordneten Kanten der Distanzplatte 5 eng entlang geführt, wenn sie sich den Schalen 6 weiter annähern, wie in Figur 3 gezeigt.

Figur 2 zeigt noch, daß über Luftkanäle 15 Luft aus dem Umgebungsbereich der Schalen 6 herausgesaugt wird (Pfeile 161). Dadurch wird im Umgebungsbereich der Schalen 6 ein Vakuum hergestellt.

In Figur 3 sind die Schneideinrichtungen 3 nicht bis an die umlaufenden Ränder 10 der Schalen 6 herangeführt. Die Halterungen 12 der Schneideinrichtungen 3 liegen in ihrer tiefsten Position auf Anschlägen 17 auf. Mit diesen Anschlägen 17 werden die Schneideinrichtungen 3 in einem Abstand zu den umlaufenden Rändern 10 gehalten. Diese Ränder 10 werden daher von den Schneideinrichtungen 3 nicht durchgeschnitten, da die Schneideinrichtungen 3 in ihren Messerhaltern 12 federnd zurückweichen können. Mit Hilfe der Siegelwerkzeuge 2 werden die abgeschnittenen Bereiche der tiefziehbaren Folie 4 anschließend auf die umlaufenden Ränder 10 aufgeschweißt. Dabei erfolgt zugleich ein Aufwärmen der Folie 4 zum Vorbereiten des Tiefziehens. Des weiteren erfolgt über durch das Oberwerkzeug 1 und die Siegelwerkzeuge 2 hindurchgeführte Überdruckleitungen 16 eine Zuführung von Luft, welche im Zusammenhang mit dem im Bereich der Schalen 6 herrschenden Unterdruck eine enge Anlage der aufgewärmten, tiefziehbaren Folie 4 an die in den Schalen 6 befindliche Gegenständen 7 gewährleistet. Bei den Gegenständen 7 kann es sich beispielsweise um Fleischprodukte handeln.

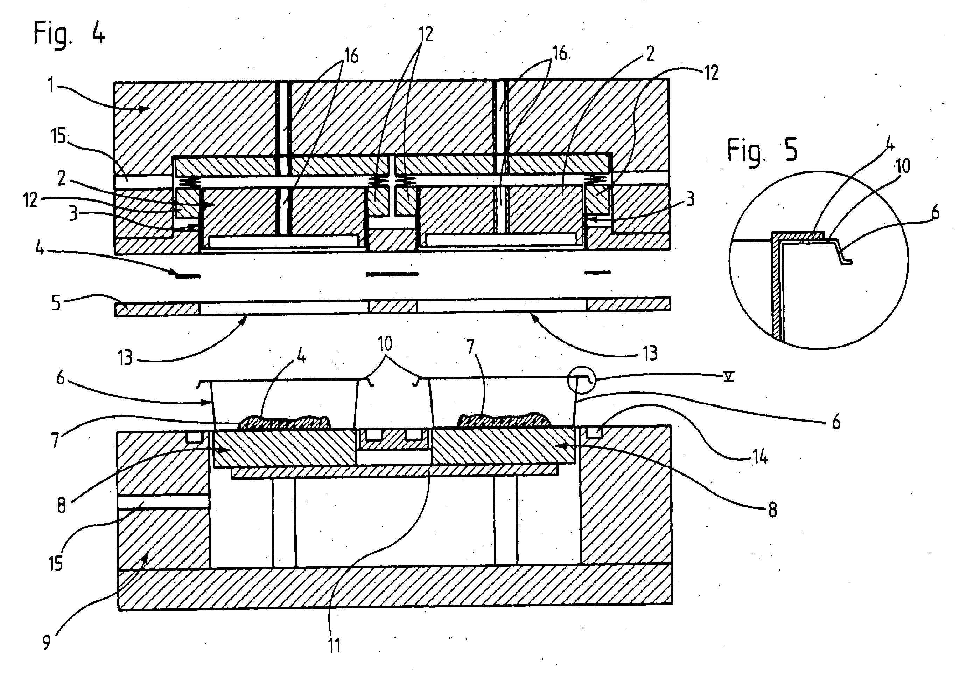

Figur 4 zeigt den Zustand der Vorrichtung nach dem Entformen der Schalen 6. Oberwerkzeug 1 und Unterwerkzeug 9 sind voneinander wieder entfernt, die Distanzplatte 5 ist von den Schalen 6 abgehoben. Von der tiefziehbaren Folie 4 verbleiben Schnittreste, welche entsorgt werden. Die Schalen 6 können nach diesem Siegelvorgang von dem Unterwerkzeug 9 entfernt werden, dieses kann anschließend neue Schalen 6 aufnehmen. Die Vorrichtung kann dabei taktweise arbeiten, beispielsweise mit 6 Takten pro Minute.

Bei der erfindungsgemäßen Vorrichtung kann es sich um eine Siegelvorrichtung handeln, mit der auch Schalen mit Folien verschlossen werden können, die nicht im "Skin"-Verfahren tiefgezogen werden. Ein und dieselbe Vorrichtung kann somit für voneinander verschiedene Verpackungsarten eingesetzt werden, bei denen gleiche genormte Grundverpackungen, wie die Schalen 6, eingesetzt werden.

Das Zuschneiden der tiefziehbaren Folie 4, das Verschweißen dieser Folie 4 auf den umlaufenden Rändern 10 sowie das Tiefziehen der Folie 4 erfolgt vorzugsweise in ein und demselben Takt, um die Bearbeitungszeit zu verkürzen.

Die Schneideinrichtungen 3 werden nicht durch die Ebene der umlaufenden Ränder 10 hindurchgeführt. Figur 5 zeigt, daß die tiefziehbare Folie 4 sauber abgeschnitten ist und daß im Bereich des umlaufenden Randes 10 ein von der Folie 4 freibleibender Bereich dieses umlaufenden Randes 10 verbleibt. Die Schneideinrichtungen 3 schneiden den umlaufenden Rand 10 nicht ab, sie können dadurch auch nicht von über den Rand 10 vorstehenden Abschnitten zu verpackender Gegenstände, wie beispielsweise Eisstiele oder Knochenteile, beschädigt werden.

Die Folie 4 legt sich eng an die Wandungen der Schale 6 und an in der Vertiefung der Schale 6 vorhandene Gegenstände 7 an, wie in Figur 5 gezeigt.

## Patentansprüche

1. Verfahren zum gasdichten Verpacken von Gegenständen mit sich eng an die Gegenstände anlegendem Folienmaterial unter Einsatz eines Vakuums, wobei der Gegenstand in eine Schale eingelegt mit umlaufenden Rand wird und zum Verschließen der Schale eine tiefziehbare Folie mit der Schale verbunden wird,
**dadurch gekennzeichnet,**
**daß** die tiefziehbare Folie (4) auf ein Maß des umlaufenden Randes (10) zugeschnitten wird und daß anschließend oder gleichzeitig die tiefziehbare Folie (4) auf den umlaufenden Rand (10) gasdicht aufgebracht wird.

2. Verfahren nach Anspruch 1, **dadurch gekennzeichnet, daß** die tiefziehbare Folie (4) auf den umlaufenden Rand (10) aufgeschweißt wird.

3. Verfahren nach Anspruch 1 oder 2, **dadurch gekennzeichnet, daß** im Umgebungsbereich der Schale (6) ein Vakuum angeordnet wird.

4. Verfahren nach einem der vorhergehenden Ansprüche, **dadurch gekennzeichnet, daß** im Umgebungsbereich der tiefziehbaren Folie (4) auf der der Schale (6) abgekehrten Seite ein Überdruck ausbildbar ist.

5. Vorrichtung zum gasdichten Verpacken von Gegenständen mit sich eng an die Gegenstände anlegendem Folienmaterial unter Einsatz eines Vakuums, vorzugsweise zum Durchführen des Verfahrens nach einem der Ansprüche 1 bis 4, umfassend eine höhenveränderbar geführte Auflage für zumindest eine Schale und umfassend zumindest ein höhenveränderbar geführtes Siegelwerkzeugfür die tiefziehbare Folie sowie mit zumindest einer Schneideinrichtung für die tiefziehbare Folie,
**dadurch gekennzeichnet,**
**daß** die Auflage zumindest eine Auflageeinrichtung für den umlaufenden Rand (10) der Schale (6) aufweist und daß zwischen der Schale (6) und der tiefziehbaren Folie (4) eine Distanzplatte (5) angeordnet ist, welche auf die Auflageeinrichtung für den umlaufenden Rand (10) auflegbar ist, wobei dabei der umlaufende Rand (10) zumindest teilweise frei bleibt und wobei in der Distanzplatte (5) zumindest ein mit der Schale (6) in Deckungslage bringbarer Durchbruch (13) angeordnet ist.

6. Vorrichtung nach Anspruch 5, **dadurch gekennzeichnet, daß** die Schneideinrichtung (3) Messerklingen umfaßt.

7. Vorrichtung nach Anspruch 5 oder 6, **dadurch gekennzeichnet, daß** die Schneideinrichtung (3) dem Siegelwerkzeug (2) räumlich zugeordnet ist.

8. Vorrichtung nach Anspruch 7, **dadurch gekennzeichnet, daß** die Schneideinrichtung (3) das Siegelwerkzeug (2) umläuft.

9. Vorrichtung nach einem der Ansprüche 5 bis 8, **dadurch gekennzeichnet, daß** das Siegelwerkzeug (2) zum Durchbruch (13) in der Distanzplatte (5) korrespondierende Abmessungen hat.

10. Vorrichtung nach Anspruch 9, **dadurch gekennzeichnet, daß** eine dem Siegelwerkzeug (2) zugeordnete Schneideinrichtung (3) eng an einer Kante des Durchbruches (13) der Distanzplatte (5) vorbeiführbar ist.

11. Vorrichtung nach Anspruch 10, **dadurch gekennzeichnet, daß** das Schneidwerkzeug (3) vom Siegelwerkzeug (2) abgekoppelt ist und federnd gelagert ist.

12. Vorrichtung nach einem der Ansprüche 5 bis 11, **dadurch gekennzeichnet, daß** durch das Siegelwerkzeug (2) hindurch zumindest eine Überdruckleitung (16) verläuft.

13. Verpackung für zumindest einen Gegenstand mit einer Schale und mit einer tiefziehbaren Folie zum Auflegen auf die Schale,
**dadurch gekennzeichnet,**
**daß** die tiefziehbare Folie (4) nach ihrem Auflegen auf zumindest einen umlaufenden Rand (10) der Schale (6) diesen Rand (10) teilweise abdeckt.

14. Verpackung nach Anspruch 13, **dadurch gekennzeichnet, daß** ein umlaufender Rand (10) der Schale (6) eine Vertiefung oder mehrere Vertiefungen in der Schale (6) umlaufend umschließt.

## Claims

1. A method for the gas-tight packaging of objects comprising film material, which is applied tightly to the objects using a vacuum, wherein the object is placed into a shell, which comprises a circumferential edge, and a film, which can be deep-drawn, is connected to the shell for closing the shell,
**characterized in**
**that** the film (4), which can be deep-drawn, is cut to a measurement of the circumferential edge (10) and in that the film (4), which can be deep-drawn, is subsequently or simultaneously applied to the circumferential edge (10) in a gas-tight manner.

2. The method according to claim 1, **characterized in that** the film (4), which can be deep-drawn, is welded onto the circumferential edge (10).

3. The method according to claim 1 or 2, **characterized in that** a vacuum is arranged in the vicinity of the shell (6).

4. The method according to one of the preceding claims, **characterized in that** an excess pressure can be formed in the vicinity of the film (4), which can be deep-drawn, on the side facing away from the shell (6).

5. A device for the gas-tight packaging of objects comprising film material, which is applied tightly to the objects using a vacuum, preferably for carrying out the method according to one of claims 1 to 4, comprising a support, which is guided so as to be height-adjustable, for at least one shell and comprising at least one sealing tool, which is guided so as to be height-adjustable, for the film, which can be deep-drawn, as well as comprising at least one cutting device for the film, which can be deep-drawn,
**characterized in**
**that** the support encompasses at least one support device for the circumferential edge (10) of the shell (6) and in that a spacer plate (5) is arranged between the shell (6) and the film (4), which can be deep-drawn, with said spacer plate (5) being capable of being applied to the support device for the circumferential edge (10), wherein the circumferential edge (10) thereby remains at least partially free and wherein at least one opening (13), which can be made to be congruent with the shell (6), is arranged in the spacer plate (5).

6. The device according to claim 5, **characterized in that** the cutting device (3) comprises knife blades.

7. The device according to claim 5 or 6, **characterized in that** the cutting device (3) is spatially assigned to the sealing tool (2).

8. The device according to claim 7, **characterized in that** the cutting device (3) revolves around the sealing tool (2).

9. The device according to one of claims 5 to 8, **characterized in that** the sealing tool (2) has measurements, which correspond to the opening (13) in the spacer plate (5).

10. The device according to claim 9, **characterized in that** a cutting device (3), which is assigned to the sealing tool (2), can be guided closely past a flange of the opening (13) of the spacer plate (5).

11. The device according to claim 10, **characterized in that** the cutting tool (3) is uncoupled from the sealing tool (2) and is supported in a resilient manner.

12. The device according to one of claims 5 to 11, **characterized in that** at least one excess pressure line (16) runs through the sealing tool (2).

13. A packaging for at least one object comprising a shell and comprising a film, which can be deep-drawn, for applying to the shell,
**characterized in**
**that**, after being applied to at least one circumferential edge (10) of the shell (6), the film (4), which can be deep-drawn, partially covers this edge (10).

14. The packaging according to claim 13, **characterized in that** a circumferential edge (10) of the shell (6) encloses a recess or a plurality of recesses in the shell (6) in a revolving manner.

## Revendications

1. Procédé d'emballage étanche au gaz d'objets avec du film de matériau se posant étroitement sur les objets en utilisant un vide, l'objet étant placé dans une coque à rebord périphérique et un film étirable étant raccordé à la coque pour fermer la coque,
**caractérisé en ce que**
le film étirable (4) est coupé à une dimension du rebord périphérique (10) et que le film étirable (4) est ensuite ou simultanément posé de manière étanche au gaz sur le rebord périphérique (10).

2. Procédé selon la revendication 1, **caractérisé en ce que** le film étirable (4) est soudé sur le rebord périphérique (10).

3. Procédé selon la revendication 1 ou 2, **caractérisé en ce qu'**un vide est créé dans la zone circonscrite par la coque (6).

4. Procédé selon une des revendications précédentes, **caractérisé en ce qu'**une surpression peut être créée dans la zone circonscrite par le film étirable (4) du côté détourné de la coque (6).

5. Procédé d'emballage étanche au gaz d'objets avec du film de matériau se posant étroitement sur les objets en utilisant un vide, de préférence pour la réalisation du procédé selon une des revendications 1 à 4, comprenant un support guidé à hauteur réglable pour au moins une coque et comprenant au moins un outil de scellement guidé à hauteur réglable pour le film étirable ainsi qu'au moins un dispositif de coupe pour le film étirable,
**caractérisé en ce que**
le support présente au moins un dispositif d'appui pour le rebord périphérique (10) de la coque (6) et que, entre la coque (6) et le film étirable (4), est disposée une plaque d'écartement (5) qui peut être posée sur le dispositif d'appui pour le rebord périphérique (10), le rebord périphérique (10) restant alors au moins partiellement libre et au moins une percée (13) pouvant être amenée en position de couverture avec la coque (6) étant pratiquée dans la plaque d'écartement (5).

6. Dispositif selon la revendication 5, **caractérisé en ce que** le dispositif de coupe (3) comprend des lames de couteau.

7. Dispositif selon la revendication 5 ou 6, **caractérisé en ce que** le dispositif de coupe (3) est associé spatialement à l'outil de scellement (2).

8. Dispositif selon la revendication 7, **caractérisé en ce que** le dispositif de coupe (3) entoure l'outil de scellement (2).

9. Dispositif selon une des revendications 5 à 8, **caractérisé en ce que** l'outil de scellement (2) a des dimensions correspondant à la percée (13) de la plaque d'écartement (5).

10. Dispositif selon la revendication 9, **caractérisé en ce qu'**un dispositif de coupe (3) associé à l'outil de scellement (2) peut être guidé étroitement le long d'un bord de la percée (13) de la plaque d'écartement (5).

11. Dispositif selon la revendication 10, **caractérisé en ce que** le dispositif de coupe (3) est dissocié de l'outil de scellement (2) et est en appui élastique.

12. Dispositif selon une des revendications 5 à 11, **caractérisé en ce que** l'outil de scellement (2) s'étend au moins à travers une conduite de surpression (16).

13. Emballage étanche pour au moins un objet avec une coque et un film étirable à poser sur la coque,
**caractérisé en ce que**
le film étirable (4), une fois posé sur au moins un rebord périphérique (10) de la coque (6), recouvre partiellement ce rebord (10).

14. Emballage selon la revendication 13, **caractérisé en ce qu'**un rebord périphérique (10) de la coque (6) circonscrit périphériquement un creux ou plusieurs creux de la coque (6).
